# DEMANDE DE BREVET EUROPEEN

(11) **EP 1 953 316 A1**
(43) Date de publication de la demande: **06.08.2008**
(21) Numéro de dépôt: 07305009.8
(22) Date de dépôt: 28.12.2007
(51) Int. Cl.: E05B 65/12, B60S 1/34, B60S 1/58

(54) **Véhicule automobile et dispositif de commande du déverrouillage d'une lunette pour ce véhicule**

(30) Priorité: 30.01.2007 FR 0700621
(71) Demandeur: PEUGEOT CITROËN AUTOMOBILES S.A., 78140 Velizy Villacoublay (FR)
(72) Inventeur: Lefranc, Francis, 92150 Suresnes (FR)

(57) **Abrégé**

Ce véhicule automobile est équipé d'un connecteur (44, 66) réversible interposé entre un détecteur (72) de déplacement et un bouton (46) de déverrouillage d'une lunette du véhicule. Le connecteur est apte à :
- accoupler mécaniquement et automatiquement le bouton (46) et le détecteur (72) lorsque la lunette (18) est déplacée de sa position ouverte vers sa position fermée et, en alternance,
- désaccoupler mécaniquement et automatiquement le bouton (46) et le détecteur (72) lorsque la lunette (18) est déplacée de sa position fermée vers sa position ouverte.

## Description

La présente invention concerne un véhicule automobile et un dispositif de commande du déverrouillage d'une lunette pour ce véhicule.

Les véhicules automobiles comportent très souvent une lunette déplaçable entre une position ouverte et une position fermée dans laquelle la lunette délimite un côté extérieur du véhicule, d'un côté intérieur du véhicule.

Une lunette est un battant d'un véhicule automobile soit entièrement vitré, soit formé d'une vitre entourée d'un cadre.

Il existe des dispositifs de commande du déverrouillage de cette lunette. Ces dispositifs comportent :
- un bouton de déverrouillage monté du côté extérieur du véhicule, ce bouton étant déplaçable entre une position de repos et une position de déverrouillage sous l'action d'une main d'un être humain,
- un détecteur de déplacements mécaniquement accouplé au bouton lorsque la lunette est dans sa position fermée, ce détecteur étant propre à transformer un déplacement du bouton en un signal électrique de déverrouillage lorsque le bouton est déplacé de sa position de repos vers sa position de déverrouillage.

La lunette est verrouillée dans sa position fermée à l'aide d'une serrure électrique commandable. Cette serrure électrique déverrouille la lunette pour permettre son déplacement vers la position ouverte en réponse au signal de déverrouillage.

Dans les dispositifs existants, le détecteur est solidaire de la lunette. Par conséquent, des conducteurs électriques s'étendent le long de la lunette avant d'atteindre un boîtier de commande de la serrure électrique. Typiquement, sur cette partie, les conducteurs sont enfouis dans la vitre de la lunette et électriquement connectés au détecteur de déplacement par l'intermédiaire de connecteurs électriques.

Ces conducteurs et connecteurs électriques se déplacent en même temps que la lunette de sorte qu'ils sont soumis à de nombreuses sollicitations mécaniques, ce qui provoque, à la longue, des pannes du dispositif de commande dues à l'usure ou au déplacement accidentel des connecteurs électriques. L'invention vise à proposer un véhicule dans lequel la commande du déverrouillage d'une lunette d'un véhicule automobile est plus robuste. Elle a donc pour objet un tel véhicule dans lequel le dispositif de commande du verrouillage comporte un connecteur réversible interposé entre le détecteur et le bouton, le connecteur étant apte à :
- accoupler mécaniquement et automatiquement le bouton et le détecteur lorsque la lunette est déplacée de sa position ouverte vers sa position fermée pour que le détecteur puisse détecter le déplacement du bouton de sa position de repos vers sa position de déverrouillage et, en alternance,
- désaccoupler mécaniquement et automatiquement le bouton et le détecteur lorsque la lunette est déplacée de sa position fermée vers sa position ouverte.

Dans le véhicule automobile ci-dessus, le connecteur permet de rendre mécaniquement indépendant le détecteur du bouton. Le détecteur peut donc être monté en un point du véhicule automobile où sa position est indépendante de la position ouverte ou fermée de la lunette. Puisque la position du détecteur ne dépend pas des déplacements de la lunette, les conducteurs et connecteurs électriques qui relient ce détecteur au boîtier de commande ne sont pas sollicités lors des déplacements de cette lunette. La commande du déverrouillage de la lunette dans le véhicule ci-dessus est donc plus robuste vis-à-vis des déplacements de la lunette.

Les modes de réalisation de ce véhicule peuvent comporter une ou plusieurs des caractéristiques suivantes :
- le connecteur du dispositif de commande comporte une première tige logée à l'intérieur du premier arbre creux et mécaniquement accouplée d'un côté au bouton et, de l'autre au détecteur lorsque la lunette est dans sa position fermée;
- le connecteur du dispositif de commande comporte une seconde tige logée à l'intérieur du second arbre creux dont une extrémité est mécaniquement accouplée à l'extrémité de la première tige lorsque la lunette est dans la position fermée, et dont l'autre extrémité opposée est mécaniquement accouplée en permanence au détecteur;
- le dispositif de commande comporte un organe élastique de rappel sollicitant le bouton vers sa position de repos lorsque la lunette est dans sa position ouverte;
- le détecteur est monté sur le véhicule automobile à un endroit où sa position est indépendante de la position de la lunette ;
- le dispositif de commande comporte au moins un conducteur électrique propre à conduire le signal électrique de déverrouillage jusqu'à un boîtier électronique de commande du déverrouillage de la lunette en réponse au signal électrique de déverrouillage.

Ces modes de réalisation du dispositif présentent en outre les avantages suivants :
- l'utilisation du premier arbre creux et de la première tige permet de simplifier l'installation du dispositif de commande du déverrouillage puisqu'on profite du perçage déjà réalisé pour l'arbre d'entraînement de l'essuie-glace,
- l'utilisation de la seconde tige et du second arbre permet d'accoupler mécaniquement et simplement le détecteur à une extrémité de la première tige.

L'invention a également pour objet un dispositif de commande du déverrouillage d'une lunette apte à être mis en oeuvre dans le véhicule ci-dessus.

L'invention sera mieux comprise à la lecture de la description qui va suivre, donnée uniquement à titre d'exemple non limitatif et faite en se référant aux dessins sur lesquels :
- les figures 1 et 2 sont des illustrations schématiques de l'arrière d'un véhicule équipé d'une lunette, respectivement, en position fermée et ouverte,
- la figure 3 est une illustration schématique d'un dispositif de commande du déverrouillage de la lunette du véhicule illustré sur les figures 1 et 2.

Dans ces figures, les mêmes références sont utilisées pour désigner les mêmes éléments.

Dans la suite de cette description, les caractéristiques et fonctions bien connues de l'homme du métier ne sont pas décrites en détail.

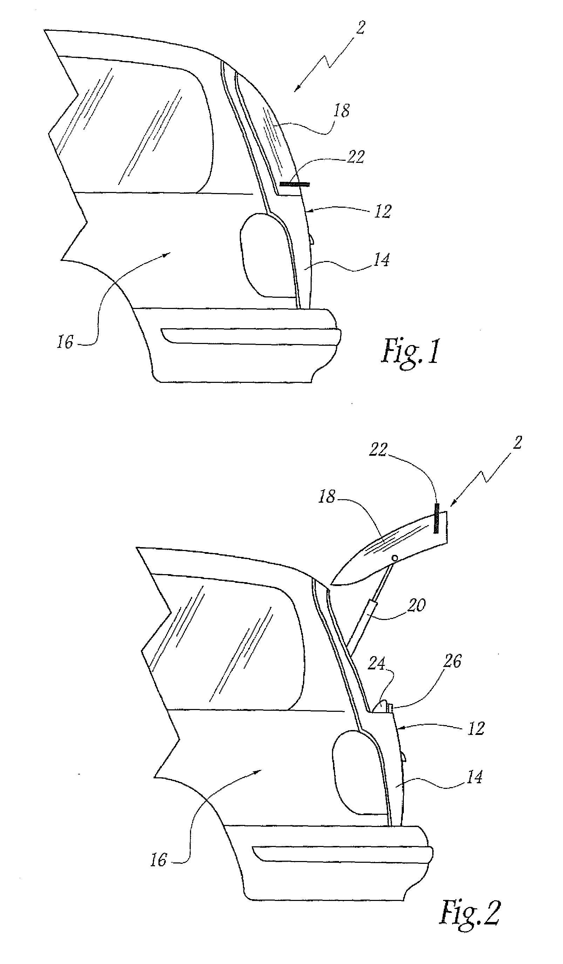

La figure 1 représente l'arrière d'un véhicule automobile 2. L'arrière de ce véhicule automobile 2 est équipé d'un hayon 12 formé d'un châssis articulé par rapport au corps 16 du véhicule. Le hayon 12 comprend également une lunette 18 articulée dans sa partie supérieure par rapport au châssis 14 du hayon 12. La lunette 18 est ici uniquement formée d'une vitre au moins partiellement transparente à la lumière.

Cette lunette 18 est déplaçable entre une position fermée représentée sur la figure 1 et une position ouverte représentée sur la figure 2. Dans la position fermée, la lunette 18 délimite un côté extérieur d'un côté intérieur du véhicule 2.

Par exemple, le déplacement de la lunette 18 de sa position fermée vers sa position ouverte est assisté à l'aide de vérins 20 (figure 2).

Un essuie-glace 22 est monté du côté extérieur sur la lunette 18. Cet essuie-glace 22 est déplaçable par un moteur 24 dans un mouvement de va et vient pour essuyer la vitre (figure 2). Le moteur 24 est monté du côté intérieur du véhicule. Ici, le moteur 24 est solidaire du hayon 12, de sorte que le moteur 24 est mécaniquement désaccouplé de l'essuie-glace 22 lorsque la lunette 18 est dans sa position ouverte et mécaniquement accouplé à l'essuie-glace 22 lorsque la lunette 18 est dans la position fermée.

Le véhicule 2 comprend également une serrure électrique 26 propre à verrouiller la lunette 18 dans sa position fermée. La serrure 26 est également commandable pour déverrouiller la lunette 18 en réponse à un signal électrique de déverrouillage.

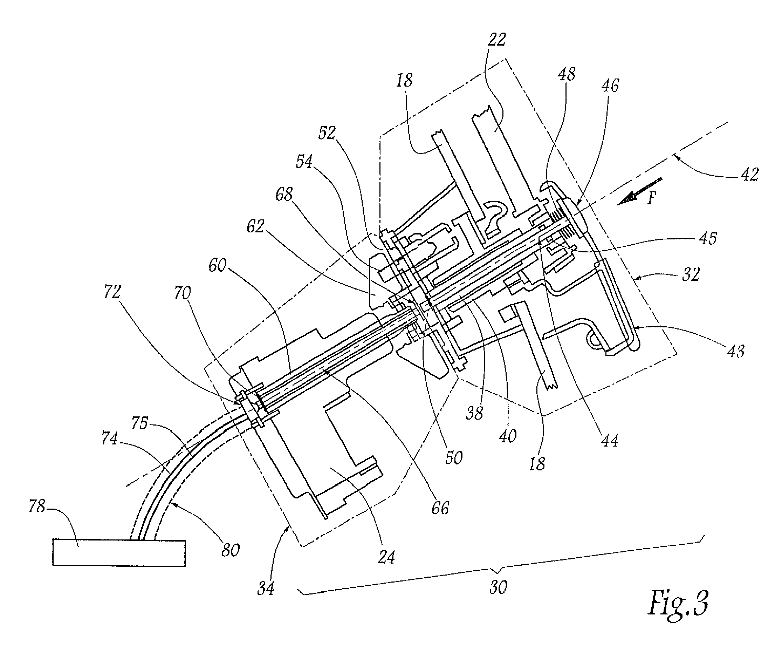

La figure 3 représente plus en détail un dispositif 30 de commande du déverrouillage de la lunette 18. Ce dispositif 30 est intimement imbriqué avec les différents éléments d'actionnement de l'essuie-glace 22. Dès lors, ces derniers éléments seront d'abord décrits.

La figure 3 représente deux parties 32 et 34, respectivement solidaires de la lunette 18 et du hayon 12. Ainsi, la partie 32 se déplace en même temps que la lunette 18 tandis que la position de la partie 34 est indépendante de la position de la lunette 18.

La partie 32 comprend un arbre d'entraînement 38 monté à rotation à l'intérieur d'un palier 40 autour d'un axe de rotation 42. L'arbre 38 traverse de part en part la lunette 18 en allant du côté extérieur jusqu'au côté intérieur. L'extrémité de l'arbre 38 du côté extérieur est fixée sans aucun degré de liberté à l'essuie-glace 22. L'arbre 38 est creux.

Le palier 40 est fixé sans aucun degré de liberté à la lunette 18.

La partie 32 comprend également une poignée 43 formant un moyen de préhension pour un utilisateur souhaitant déplacer la lunette 18 de sa position fermée vers sa position ouverte.

Le dispositif 30 comprend une tige 44 reçue à l'intérieur du creux formé par l'arbre 38. La tige 44 est montée à translation le long de l'axe 42. L'extrémité de la tige 44, du côté extérieur, fait saillie à l'extrémité de l'arbre 38. Cette extrémité reçoit sans aucun degré de liberté un bouton 46 de déverrouillage. Entre ce bouton 46 et la lunette 18 est interposé un ressort 48 formant un organe élastique de rappel du bouton 46 vers sa position de repos.

Un joint d'étanchéité, par exemple du type torique, est disposé entre la tige 44 et l'arbre creux 38. Il permet d'annuler toute infiltration possible d'eau entre la tige 44 et l'arbre 38, Pour cela, une gorge 45 est ménagée à l'intérieur de l'arbre 38 sachant bien évidemment qu'il est possible d'usiner une gorge sur la périphérie extérieure de la tige 44. De préférence, le joint d'étanchéité est disposé au niveau de l'extrémité de l'arbre 38 proche du côté extérieur.

Le bouton 46 est déplaçable en translation le long de l'axe 42 entre une position de repos et une position enfoncée appelée ici position de déverrouillage.

L'extrémité de la tige 44 faisant saillie, du côté intérieur, à l'extrémité de l'arbre 38 est équipée d'un moyen de retenue, tel un serre clips 50, qui est destiné à maintenir la tige 44 à l'intérieur de l'arbre 38.

Une plaque 52 perpendiculaire à l'axe 42 est fixée sans aucun degré de liberté à l'extrémité de l'arbre 38. Cette plaque 52 est équipée de pions 54.

La partie 34 comporte le moteur 24 ainsi que son arbre 60 d'entraînement. L'axe de rotation de l'arbre 60 est confondu avec l'axe 42. L'axe 60 est creux. Une plaque 62 perpendiculaire à l'axe 42 est fixée sans aucun degré de liberté à l'extrémité de l'arbre 60 tournée vers la lunette 18. Cette plaque 62 comprend des logements destinés à recevoir, de façon amovible, les pions 54 lorsque la lunette 18 est en position fermée. Lorsque les pions sont reçus à l'intérieur des logements, les plaques 52 et 62 sont solidaires l'une de l'autre en rotation autour de l'axe 42. Les logements de la plaque 62 sont conçus pour recevoir automatiquement les pions 54 lorsque la lunette 18 se déplace de sa position ouverte vers sa position fermée et, à l'inverse, pour libérer automatiquement les pions 54 lorsque la lunette 18 se déplace de sa position fermée vers sa position ouverte.

Les pions 54 comme les logements sont excentrés par rapport à l'axe 42 de sorte que la rotation de l'arbre 60 entraîne la rotation de la plaque 62 qui entraîne par l'intermédiaire des logements et des pions 54 la rotation de la plaque 52. La rotation de la plaque 52 entraîne la rotation de l'arbre 38 qui, à son tour, déplace l'essuie-glace 22.

Le dispositif 30 comporte une tige 66 logée à l'intérieur de l'arbre 60. La tige 66 est montée à translation le long de l'axe 42. Lorsque la lunette 18 est dans sa position fermée, l'extrémité de la tige 66 tournée vers la lunette 18 est en appui sur l'extrémité correspondante de la tige 44. Ici, cette extrémité est équipée d'un disque 68 dont la surface est plus grande que la section transversale de la tige 44 de manière à compenser des erreurs de positionnement de cette tige 44 par rapport à la tige 66.

L'extrémité de la tige 66 opposée est équipée d'un serre clips 70 propre à maintenir la tige 66 à l'intérieur de l'arbre 60. Le dispositif 30 comporte aussi en appui sur cette extrémité équipée du serre clips 70 un bouton poussoir 72. Le bouton poussoir 72 est fixé sans aucun degré de liberté à la carcasse du moteur 24. Ce bouton poussoir 72 forme un détecteur de déplacement propre à transformer un déplacement en translation de la tige 66 en un signal électrique de déverrouillage.

On comprend donc que l'association de la tige 44, du disque 68 et de la tige 66 forme un connecteur réversible propre à accoupler et, en alternance, désaccoupler, mécaniquement le bouton 46 du bouton 72 en fonction de la position de la lunette 18.

Le bouton poussoir 72 est raccordé par l'intermédiaire de deux conducteurs électriques 74, 75 à un boîtier électronique de commande 78. Ces conducteurs 74, 75 permettent de conduire le signal électrique de déverrouillage produit par le bouton 72 lorsque, par exemple, le bouton 72 est enfoncé.

Le boîtier 78 permet notamment de commander la serrure électrique 26 et donc le déverrouillage de la lunette 18. Ici, le boîtier 78 permet également de commander le moteur 24. Ainsi, les conducteurs 74 et 75 font partie du même faisceau de conducteurs électriques que ceux utilisés pour commander le moteur 24. Ici, pour simplifier l'illustration, seule l'enveloppe 80 de ce faisceau de conducteurs a été représentée.

Le fonctionnement du dispositif de déverrouillage va maintenant être décrit.

Initialement, la lunette 18 est dans sa position fermée et le bouton 46 est dans sa position de repos. Dans ces conditions, la serrure 26 empêche tout déplacement de la lunette 18 de sa position fermée vers sa position ouverte sans que le bouton 46 ait été enfoncé au préalable.

Lorsqu'un utilisateur souhaite ouvrir la lunette 18, il enfonce à l'aide d'un doigt le bouton 46 dans la direction F indiquée sur la figure 3. En réponse, le bouton 46 se déplace de sa position de repos vers sa position de déverrouillage. Ce déplacement du bouton 46 vers la position de déverrouillage provoque également la translation dans la direction F de la tige 44. Etant donné que l'extrémité de la tige 44 est en appui sur une extrémité correspondante de la tige 66, ce mouvement de translation de la tige 44 provoque également la translation dans la direction F le long de l'axe 42 de la tige 66. Le mouvement de translation de la tige 66 provoque l'enfoncement du bouton poussoir 72. Lorsque le bouton poussoir 72 est suffisamment enfoncé, un signal électrique de déverrouillage est envoyé au boîtier électronique 78. Ce signal électrique consiste, par exemple, en la mise en court-circuit des conducteurs 74 et 75 par l'intermédiaire du bouton 72. En réponse à ce signal de déverrouillage, le boîtier 78 commande la serrure 26 pour déverrouiller la lunette 18. La lunette 18 peut alors se déplacer de sa position fermée vers sa position ouverte sous l'action des vérins 20.

Lors de ce déplacement de la lunette 18 de sa position fermée vers sa position ouverte, la partie 32 s'éloigne de la partie 34 de sorte qu'après un parcours de moins de 5 cm, les arbres 60 et 38 sont mécaniquement désaccouplés et les extrémités des tiges 44 et 66 ne sont plus en appui l'une sur l'autre.

Lorsque l'utilisateur souhaite refermer la lunette 18, il déplace celle-ci manuellement de sa position ouverte vers sa position fermée. Ce déplacement provoque automatiquement l'emboîtement des pions 54 dans les logements correspondants de la plaque 62. Cela provoque également aussi automatiquement la mise en appui de l'extrémité de la tige 44 sur le disque 68 de la tige 66. On revient ainsi à la position initiale représentée sur la figure 3.

De nombreux autres modes de réalisation sont possibles. Par exemple, la tige 44 et le bouton 46 ne sont pas réalisés en une seule et même pièce mais en plusieurs pièces assemblées mécaniquement les unes aux autres. De façon similaire, il n'est pas nécessaire que la tige 66 et le disque 68 soient réalisés d'une seule et même pièce, mais, en variante, ils peuvent être réalisés à partir de plusieurs pièces assemblées mécaniquement les unes avec les autres.

En plus de la force de rappel exercée par le bouton poussoir 72 sur la tige 66 pour la maintenir en appui sur l'extrémité de la tige 44, un organe élastique de rappel tel qu'un ressort, peut être prévu.

En variante, le bouton poussoir 72 est remplacé par un bouton poussoir à deux niveaux de pression. Un premier niveau de pression permet de détecter que l'extrémité de la tige 66 est en appui sur l'extrémité correspondante de la tige 44 et que le bouton 46 n'a pas été enfoncé. Le bouton poussoir envoie alors un premier signal électrique dit de position fermée indiquant au boîtier 78 que la lunette 18 est dans sa position fermée. Lorsqu'un niveau de pression supérieur est franchi, le bouton 72 envoie alors le signal de déverrouillage. Ce niveau de pression supérieur est uniquement franchi lorsque le bouton 46 atteint sa position de déverrouillage.

Le bouton 72 peut être remplacé par un détecteur quelconque de déplacement en translation de l'extrémité de la tige 66. Par exemple, le bouton 72 peut être remplacé par un détecteur optique de la présence ou de l'absence de l'extrémité de la tige 70 dans une position donnée.

Il n'est pas nécessaire que le châssis 14 soit articulé. Celui-ci peut être fixé sans aucun degré de liberté au corps 16 du véhicule.

## Revendications

1. Véhicule automobile équipé :
- d'une lunette (18) déplaçable entre une position ouverte et une position fermée dans laquelle la lunette délimite un côté extérieur du véhicule automobile, d'un côté intérieur du véhicule automobile,
- d'un dispositif (30) de commande du déverrouillage de la lunette, ce dispositif comportant :
. un bouton (46) de déverrouillage monté du côté extérieur du véhicule, ce bouton étant déplaçable entre une position de repos et une position de déverrouillage sous l'action d'une main d'un être humain,
. un détecteur (72) de déplacements mécaniquement accouplé au bouton (46) lorsque la lunette est dans sa position fermée, ce détecteur étant propre à transformer un déplacement du bouton en un signal électrique de déverrouillage lorsque le bouton est déplacé de sa position de repos vers sa position de déverrouillage,
**caractérisé en ce que** le dispositif de commande comporte un connecteur (44, 66) réversible interposé entre le détecteur (72) et le bouton (46), le connecteur étant apte à :
. accoupler mécaniquement et automatiquement le bouton (46) et le détecteur (72) lorsque la lunette (18) est déplacée de sa position ouverte vers sa position fermée pour que le détecteur puisse détecter le déplacement du bouton de sa position de repos vers sa position de déverrouillage et, en alternance,
. désaccoupler mécaniquement et automatiquement le bouton (46) et le détecteur (72) lorsque la lunette (18) est déplacée de sa position fermée vers sa position ouverte.

2. Véhicule selon la revendication 1 équipé:
- d'un essuie-glace (22) monté du côté extérieur et d'un moteur d'entraînement, propre à déplacer l'essuie-glace, monté du côté intérieur,
- d'un premier arbre creux (38) d'entraînement en rotation de l'essuie-glace traversant de part en part la lunette et qui, lorsque la lunette est dans sa position fermée, accouple mécaniquement l'essuie-glace au moteur d'entraînement,
dans lequel le connecteur du dispositif de commande comporte une première tige (44) logée à l'intérieur du premier arbre creux et mécaniquement accouplée d'un côté au bouton (46) et, de l'autre au détecteur (72) lorsque la lunette est dans sa position fermée.

3. Véhicule selon la revendication 2, équipé d'un second arbre creux (60) qui, lorsque la lunette est dans sa position fermée, présente une extrémité mécaniquement accouplée à une extrémité du premier arbre creux (38), et une extrémité opposée mécaniquement accouplée en permanence au moteur d'entraînement,
dans lequel le connecteur du dispositif de commande comporte une seconde tige (66) logée à l'intérieur du second arbre creux dont une extrémité est mécaniquement accouplée à l'extrémité de la première tige lorsque la lunette est dans la position fermée, et dont l'autre extrémité opposée est mécaniquement accouplée en permanence au détecteur.

4. Véhicule selon l'une quelconque des revendications précédentes, dans lequel le dispositif de commande comporte un organe élastique (48) de rappel sollicitant le bouton (46) vers sa position de repos lorsque la lunette est dans sa position ouverte.

5. Véhicule selon l'une quelconque des revendications précédentes, **caractérisé en ce que** le détecteur (72) est monté sur le véhicule automobile à un endroit où sa position est indépendante de la position de la lunette (18).

6. Véhicule selon l'une quelconque des revendications précédentes, **caractérisé en ce que** le dispositif de commande comporte au moins un conducteur électrique (74, 75) propre à conduire le signal électrique de déverrouillage jusqu'à un boîtier électronique de commande du déverrouillage de la lunette en réponse au signal électrique de déverrouillage.

7. Dispositif de commande du déverrouillage d'une lunette d'un véhicule automobile déplaçable entre une position ouverte et une position fermée dans laquelle la lunette délimite un côté extérieur du véhicule automobile, d'un côté intérieur du véhicule automobile, ce dispositif comportant :
- un bouton (46) de déverrouillage monté du côté extérieur du véhicule, ce bouton étant déplaçable entre une position de repos et une position de déverrouillage sous l'action d'une main d'un être humain,
- un détecteur (72) de déplacements mécaniquement accouplé au bouton (46) lorsque la lunette est dans sa position fermée, ce détecteur étant propre à transformer un déplacement du bouton en un signal électrique de déverrouillage lorsque le bouton est déplacé de sa position de repos vers sa position de déverrouillage,
**caractérisé en ce que** le dispositif comporte un connecteur (44, 66) réversible interposé entre le détecteur (72) et le bouton (46), le connecteur étant apte à :
. accoupler mécaniquement et automatiquement le bouton (46) et le détecteur (72) lorsque la lunette (18) est déplacée de sa position ouverte vers sa position fermée pour que le détecteur puisse détecter le déplacement du bouton de sa position de repos vers sa position de déverrouillage et, en alternance,
. désaccoupler mécaniquement et automatiquement le bouton (46) et le détecteur (72) lorsque la lunette (18) est déplacée de sa position fermée vers sa position ouverte.
